# EUROPEAN PATENT APPLICATION

(11) **EP 4 451 581 A1**
(43) Date of publication of application: **23.10.2024**
(21) Application number: 22932931.3
(22) Date of filing: 01.07.2022
(51) Int. Cl.: H04J 3/06

(54) **CLOCK SYNCHRONIZATION METHOD, DEVICE, AND STORAGE MEDIUM**

(30) Priority: 21.03.2022 CN 202210282211
(71) Applicant: ZTE Corporation, Shenzhen, Guangdong 518057 (CN)
(72) Inventor: TAN, Jie, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN); GAO, Yuan, Shenzhen, Guangdong 518057 (CN)
(74) Representative: Aipex B.V.
(86) International application number: PCT/CN2022/103472
(87) International publication number: WO 2023/178879

(57) **Abstract**

Provided are a clock synchronization method and device and a storage medium. A clock synchronization method applied by a first communication node includes: in response to detecting a failure of an original clock source where a master clock is located, generating corresponding clock source switching information according to a target clock source; and transmitting the clock source switching information to a second communication node or a third communication node.

## Description

### CROSS-REFERENCE TO RELATED APPLICATION(S)

This application claims priority to Chinese Patent Application No. 202210282211.3 filed Mar. 21, 2022, the disclosure of which is incorporated herein by reference in its entirety.

### TECHNICAL FIELD

The present application relates to the field of communications and, in particular, to a clock synchronization method and device and a storage medium.

### BACKGROUND

A fifth-generation mobile communication technology (5G) system relies on reference precision clock signals for network synchronization to operate. These synchronization clocks are generated by a master clock. The master clock typically obtains clock information from a global navigation satellite system (GNSS) receiver. To satisfy related synchronization requirements even in the case of a failure, an apparatus for solving a potential degradation of GNSS signal performance is typically included in a synchronization network design. Some deployments in the 5G system involve applications that may be sensitive to any degradations of the clock signals. In this case, it is beneficial to enhance the 5G system to serve as a backup for a GNSS reference loss. In some embodiments, the timing resilience enhancement of the 5G system may collaborate with different types of time sources (such as atomic clocks and time services transmitted over optical fibers) to provide robust time synchronization.

The collaboration of different types of time sources requires the design of a transformation mechanism of clock sources in the 5G system, that is, the 5G system should be able to support a mechanism (such as an internal maintenance capability of the 5G system, an atomic clock, optical fiber synchronization, a Terrestrial Beacon System (TBS), and a GNSS) indicating the presence of available alternative time sources to a device (such as a user equipment (UE) or an application program). Therefore, in the case where the 5G system supports the elastic clocks, how to switch between different clock sources is an urgent problem to be solved.

### SUMMARY

An embodiment of the present application provides a clock synchronization method applied by a first communication node. The method includes: in response to detecting a failure of an original clock source where a master clock is located, generating corresponding clock source switching information according to a target clock source; and transmitting the clock source switching information to a second communication node or a third communication node.

An embodiment of the present application provides a clock synchronization method applied by a first communication node. The method includes receiving clock source switching information transmitted by a third communication node through downlink information; and determining a clock according to the clock source switching information.

An embodiment of the present application provides a clock synchronization method applied by a second communication node. The method includes receiving clock source switching information transmitted by a first communication node; and determining a clock according to the clock source switching information.

An embodiment of the present application provides a clock synchronization method applied by a third communication node. The method includes receiving clock source switching information transmitted by a first communication node; and determining a clock source according to the clock source switching information.

An embodiment of the present application provides a clock synchronization method applied by a third communication node. The method includes transmitting clock source switching information to a first communication node through downlink information.

An embodiment of the present application provides a clock synchronization method applied by a fourth communication node. The method includes receiving a first handover request message transmitted by a first communication node, where the first handover request message carries at least one of clock source switching information or a state report of an original clock source; and transmitting the clock source switching information to a second communication node and a third communication node.

An embodiment of the present application provides a clock synchronization device including a memory and one or more processors. The memory is configured to store one or more programs. The one or more processors are configured to perform the method of any one of the preceding embodiments when executing the one or more programs.

An embodiment of the present application provides a storage medium storing a computer program which, when executed by a processor, causes the processor to perform the method of any one of the preceding embodiments.

### BRIEF DESCRIPTION OF DRAWINGS

FIG. 1 is a flowchart of a clock synchronization method according to an embodiment of the present application;
FIG. 2 is another flowchart of a clock synchronization method according to an embodiment of the present application;
FIG. 3 is another flowchart of a clock synchronization method according to an embodiment of the present application;
FIG. 4 is another flowchart of a clock synchronization method according to an embodiment of the present application;
FIG. 5 is another flowchart of a clock synchronization method according to an embodiment of the present application;
FIG. 6 is another flowchart of a clock synchronization method according to an embodiment of the present application;
FIG. 7 is a schematic diagram of interaction for clock synchronization according to an embodiment of the present application;
FIG. 8 is another schematic diagram of interaction for clock synchronization according to an embodiment of the present application;
FIG. 9 is another schematic diagram of interaction for clock synchronization according to an embodiment of the present application;
FIG. 10 is another schematic diagram of interaction for clock synchronization according to an embodiment of the present application;
FIG. 11 is another schematic diagram of interaction for clock synchronization according to an embodiment of the present application;
FIG. 12 is another schematic diagram of interaction for clock synchronization according to an embodiment of the present application;
FIG. 13 is another schematic diagram of interaction for clock synchronization according to an embodiment of the present application;
FIG. 14 is a block diagram of a clock synchronization apparatus according to an embodiment of the present application;
FIG. 15 is another block diagram of a clock synchronization apparatus according to an embodiment of the present application;
FIG. 16 is another block diagram of a clock synchronization apparatus according to an embodiment of the present application;
FIG. 17 is another block diagram of a clock synchronization apparatus according to an embodiment of the present application;
FIG. 18 is another block diagram of a clock synchronization apparatus according to an embodiment of the present application;
FIG. 19 is another block diagram of a clock synchronization apparatus according to an embodiment of the present application; and
FIG. 20 is a structural diagram of a clock synchronization device according to an embodiment of the present application.

### DETAILED DESCRIPTION

Embodiments of the present application are described hereinafter in conjunction with the drawings. The present application is described below in conjunction with embodiments and the drawings. The examples listed hereinafter are intended to explain the present application and not to limit the scope of the present application.

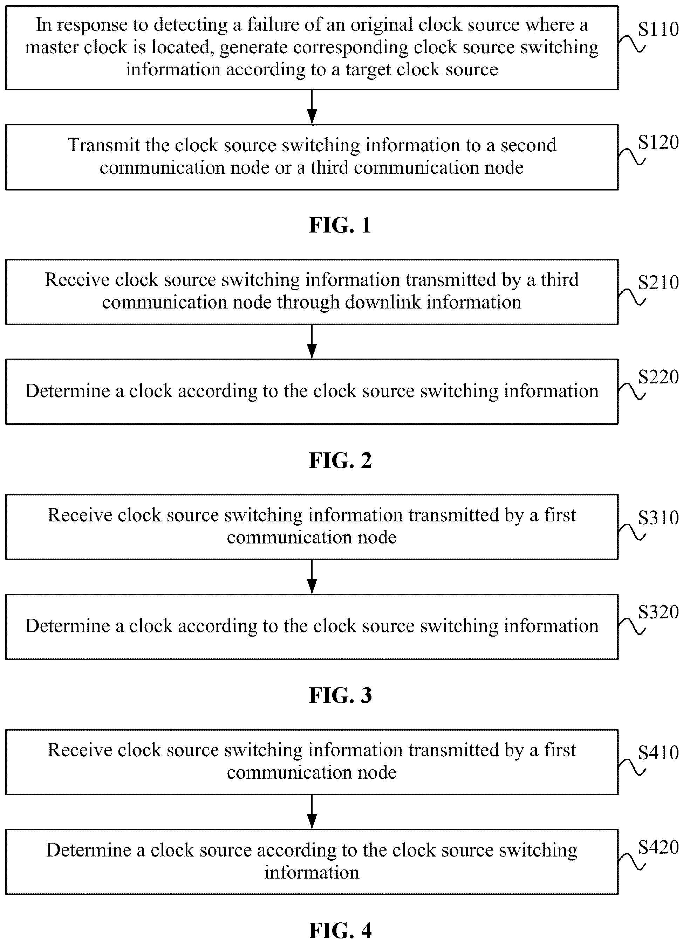

In an embodiment, FIG. 1 is a flowchart of a clock synchronization method according to an embodiment of the present application. This embodiment may be performed by a first communication node. The first communication node may be a base station. In this embodiment, the first communication node acquires clock information directly from a GNSS receiver to generate corresponding clock source switching information. As shown in FIG. 1, clock synchronization in this embodiment includes S110 and S 120.

In S 110, in response to detecting a failure of an original clock source where a master clock is located, the corresponding clock source switching information is generated according to a target clock source.

The original clock source where the master clock is located refers to a clock source where the master clock of the first communication node is currently located. In the embodiment, when a second communication node detects that a clock source of the second communication node drifts or that a master clock of the second communication node is not precise, the second communication node automatically transmits a request for acquiring valid clock information to the first communication node, and the first communication node detects the original clock source where the master clock of the first communication node is located to determine whether the master clock is valid (that is, whether a failure occurs) after receiving the request for acquiring valid clock information. Alternatively, the first communication node regularly monitors whether the master clock is valid (that is, whether a failure occurs), that is, monitors whether the clock source where the master clock is located drifts or whether the master clock of the first communication node is not precise. In the case where the original clock source where the master clock of the first communication node is located fails, that is, in the case where the original clock source where the master clock of the first communication node is located drifts or the master clock of the first communication node is not precise, the first communication node actively acquires the clock information from the GNSS receiver to determine the target clock source and switches from the original clock source to the target clock source to acquire the valid clock information. The target clock source refers to a clock source to which the first communication node is about to switch and may also be understood as a clock source that may update the master clock of the original clock source.

The clock source switching information refers to information for assisting in clock source switching, that is, the clock source switching information may assist the first communication node in updating the master clock of the original clock source or assist the first communication node in switching to the target clock source to acquire the valid clock information.

In S 120, the clock source switching information is transmitted to the second communication node or a third communication node.

The second communication node refers to a terminal side (which, for example, may be a UE). The third communication node refers to a core network (which, for example, may be an access and mobility management function (AMF)). In the embodiment, the first communication node transmits the clock source switching information to the second communication node to enable the second communication node to determine a clock according to the clock source switching information to acquire the valid clock information. Alternatively, the first communication node transmits the clock source switching information to the third communication node to enable the third communication node to determine a clock source according to the clock source switching information to switch to the target clock source, thereby ensuring that the original clock source can be replaced with another clock source in time in the case where the master clock of the first communication node decreases in precision or the clock source where the master clock is located is lost and thus ensuring clock synchronization.

In an embodiment, the clock source switching information includes at least one of: clock source switching indication information, a reference clock of the target clock source at a clock source switching instant, a clock difference between the original clock source and the target clock source, a clock difference between the original clock source and the target clock source at a clock source switching instant, a clock source switching instant, or a state report of the original clock source. The clock source switching indication information refers to information indicating the switching from the original clock source to the target clock source. The reference clock of the target clock source at the clock source switching instant refers to a reference clock corresponding to the target clock source at the clock source switching instant. The clock difference between the original clock source and the target clock source refers to a difference between the master clock of the original clock source and a master clock of the target clock source at any instant. The clock difference between the original clock source and the target clock source at the clock source switching instant refers to the clock difference between the original clock source and the target clock source at the instant of the clock source switching. The clock source switching instant refers to a time clock source switching is expected to be performed. The state report of the original clock source refers to a report of a current state of the original clock source (for example, the precision of the master clock, a loss of the master clock, a decrease in the precision of the master clock, or a drift of the clock source). It is to be noted that in the case where the clock difference between the original clock source and the target clock source is a fixed value, the clock difference between the original clock source and the target clock source is the same as the clock difference between the original clock source and the target clock source at the clock source switching instant.

In an embodiment, the clock synchronization method applied by the first communication node further includes notifying the second communication node to determine the clock according to the clock source switching information.

The second communication node is notified to determine the clock according to the clock source switching information in at least one of the following manners: The second communication node is notified to determine the clock at the clock source switching instant according to the reference clock of the target clock source at the clock source switching instant; the second communication node is notified to update a reference clock of the original clock source according to the clock difference between the original clock source and the target clock source; the second communication node is notified to determine clock information of the target clock source according to the clock difference between the original clock source and the target clock source and determine the clock at the clock source switching instant; or the second communication node is notified to determine clock information of the target clock source according to the clock difference between the original clock source and the target clock source at the clock source switching instant and determine the clock at the clock source switching instant.

In the embodiment, after the first communication node transmits the clock source switching information to the second communication node, the first communication node notifies the second communication node to acquire the valid clock information according to the clock source switching information so that the second communication node determines the reference clock of the second communication node. In an embodiment, in the case where clock information of the original clock source is consistent with or the same as the clock information of the target clock source, the first communication node may notify the second communication node to directly update the reference clock by using the target clock source. In an embodiment, in the case where the clock difference between the original clock source and the target clock source is the fixed value, the first communication node may notify the second communication node to directly update the reference clock at the execution instant of the clock source switching according to the reference clock of the target clock source at the clock source switching instant; or the first communication node may notify the second communication node to calculate the master clock of the original clock source according to the clock difference between the original clock source and the target clock source and use the calculated master clock of the original clock source as the reference clock for updating; or the first communication node may notify the second communication node to calculate the clock information of the target clock source according to the clock difference between the original clock source and the target clock source and switch to the target clock source at the clock source switching instant to determine a valid clock of the second communication node. In an embodiment, in the case where the clock difference between the original clock source and the target clock source is a variable value, the first communication node may notify the second communication node to directly update the reference clock at the execution instant of the clock source switching according to the reference clock of the target clock source at the clock source switching instant; or the first communication node may notify the second communication node to calculate the clock information of the target clock source according to the clock difference between the original clock source and the target clock source at the clock source switching instant and switch to the target clock source at the clock source switching instant to determine the valid clock of the second communication node.

In an embodiment, indication information corresponding to the clock source switching information includes at least one of: downlink information (for example, DLInformationTransfer), reference clock information (for example, ReferenceTimeInfo), a system information block (SIB), a media access control control element (MAC CE) predefined in a local identifier (LCID) reserved in a downlink shared channel (DL-SCH), or downlink control information (DCI). In the embodiment, the first communication node may transmit the clock source switching information to the second communication node in a unicast or broadcast manner. In an embodiment, in the case where the first communication node transmits the clock source switching information to the second communication node in the unicast manner, the first communication node may include the clock source switching information in the downlink information or may include the clock source switching information in the reference clock information. In an embodiment, in the case where the first communication node transmits the clock source switching information to the second communication node in the broadcast manner, the first communication node may include the clock source switching information in the SIB, may predefine, in the LCID reserved in the DL-SCH, an MAC CE format carrying the clock source switching information, may predefine a DCI format carrying the clock source switching information, or may include the clock source switching information in the reference clock information, which is not limited herein.

In an embodiment, the clock synchronization method applied by the first communication node further includes notifying the third communication node to determine a clock source according to the clock source switching information.

In an embodiment, the third communication node is notified to determine the clock source according to the clock source switching information in at least one of the following manners: The third communication node is notified to perform switching at the clock source switching instant according to the reference clock of the target clock source at the clock source switching instant; the third communication node is notified to update the reference clock of the original clock source according to the clock difference between the original clock source and the target clock source; the third communication node is notified to determine the clock information of the target clock source according to the clock difference between the original clock source and the target clock source and perform switching at the clock source switching instant; or the third communication node is notified to determine the clock information of the target clock source according to the clock difference between the original clock source and the target clock source at the clock source switching instant and perform switching at the clock source switching instant.

In the embodiment, after the first communication node transmits the clock source switching information to the third communication node, the first communication node notifies the third communication node to determine the clock source according to the clock source switching information to switch to the corresponding target clock source. In an embodiment, in the case where the clock information of the original clock source is consistent with or the same as the clock information of the target clock source, the first communication node may notify the third communication node to directly update the reference clock by using the target clock source. In an embodiment, in the case where the clock difference between the original clock source and the target clock source is the fixed value, the first communication node may notify the third communication node to directly switch to the target clock source at the execution instant of the clock source switching according to the reference clock of the target clock source at the clock source switching instant; or the first communication node may notify the third communication node to calculate the master clock of the original clock source according to the clock difference between the original clock source and the target clock source and use the calculated the master clock of the original clock source as the reference clock for updating; or the first communication node may notify the third communication node to calculate the clock information of the target clock source according to the clock difference between the original clock source and the target clock source and switch to the target clock source at the clock source switching instant. In an embodiment, in the case where the clock difference between the original clock source and the target clock source is the variable value, the first communication node may notify the third communication node to directly switch to the target clock source at the execution instant of the clock source switching according to the reference clock of the target clock source at the clock source switching instant; or the first communication node may notify the third communication node to calculate the clock information of the target clock source according to the clock difference between the original clock source and the target clock source at the clock source switching instant and switch to the target clock source at the clock source switching instant.

In an embodiment, in the case where the first communication node includes a centralized unit (CU) and a distributed unit (DU), the clock source switching information is transmitted to the second communication node or the third communication node in the following manners: The DU actively transmits the clock source switching information to the CU through uplink information; and the CU transmits the clock source switching information to the second communication node or the third communication node.

In the embodiment, in the case where the first communication node is divided into the CU and the DU, the DU senses whether the original clock source of the first communication node fails. That is, if the DU senses that the original clock source fails, the DU actively transmits the clock source switching information to the CU through the uplink information, and thus the CU transmits the clock source switching information to the second communication node or the third communication node.

In an embodiment, FIG. 2 is another flowchart of a clock synchronization method according to an embodiment of the present application. This embodiment may be performed by a first communication node. The first communication node may be a base station. In this embodiment, a third communication node acquires clock information from a GNSS receiver to obtain corresponding clock source switching information. As shown in FIG. 2, the clock synchronization method in this embodiment includes S210 and S220.

In S210, the clock source switching information transmitted by the third communication node through downlink information is received.

In S220, a clock is determined according to the clock source switching information.

In the embodiment, in the case where a clock source of the third communication node is switched, to ensure that a clock difference between a second communication node and the third communication node satisfies a traffic requirement, the third communication node may transmit the clock source switching information to the first communication node through the downlink information to enable the first communication node to transmit the clock source switching information to the second communication node through downlink information to ensure clock synchronization.

It is to be noted that for the explanation and description of the clock source switching information, reference may be made to the description in the preceding embodiments, and the details are not repeated here.

In an embodiment, the clock is determined according to the clock source switching information in at least one of the following manners: The clock is determined at a clock source switching instant according to a reference clock of a target clock source at the clock source switching instant; a reference clock of an original clock source is updated according to a clock difference between the original clock source and a target clock source; clock information of a target clock source is determined according to a clock difference between an original clock source and the target clock source and the clock is determined at a clock source switching instant; or clock information of a target clock source is determined according to a clock difference between an original clock source and the target clock source at a clock source switching instant and the clock is determined at the clock source switching instant.

In the embodiment, after the first communication node receives the clock source switching information transmitted by the third communication node, the first communication node acquires valid clock information according to the clock source switching information to update the reference clock of the first communication node.

In an embodiment, in the case where clock information of the original clock source is consistent with or the same as the clock information of the target clock source, the first communication node may directly update the reference clock by using the target clock source. In an embodiment, in the case where the clock difference between the original clock source and the target clock source is a fixed value, the first communication node may directly update the reference clock at the execution instant of the clock source switching according to the reference clock of the target clock source at the clock source switching instant; or the first communication node may calculate a master clock of the original clock source according to the clock difference between the original clock source and the target clock source and use the calculated master clock of the original clock source as the reference clock for updating; or the first communication node may calculate the clock information of the target clock source according to the clock difference between the original clock source and the target clock source and switch to the target clock source at the clock source switching instant to determine a valid clock of the first communication node. In an embodiment, in the case where the clock difference between the original clock source and the target clock source is a variable value, the first communication node may directly update the reference clock at the execution instant of the clock source switching according to the reference clock of the target clock source at the clock source switching instant; or the first communication node may calculate the clock information of the target clock source according to the clock difference between the original clock source and the target clock source at the clock source switching instant and switch to the target clock source at the clock source switching instant to determine the valid clock of the first communication node.

In an embodiment, in the case where the first communication node includes a CU and a DU, the clock source switching information transmitted by the third communication node through the downlink information is received in the following manner: The CU receives the clock source switching information transmitted by the third communication node through the downlink information.

The CU actively transmits the clock source switching information to the DU through downlink information. In the embodiment, in the case where the first communication node is divided into the CU and the DU, the CU may receive the clock source switching information transmitted by the third communication node and then actively provide the DU with the clock source switching information through the downlink information.

In an embodiment, in the case where the first communication node serves as an original base station, the clock synchronization method applied by the first communication node further includes transmitting a first handover request message to a fourth communication node, where the first handover request message carries at least one of the clock source switching information or a state report of the original clock source. In the embodiment, in the case where the first communication node serves as the original base station, the fourth communication node refers to a target base station. In the embodiment, in a mobile handover procedure of the second communication node, to implement precise synchronization between a reference clock of the fourth communication node and a reference clock of the second communication node more quickly, the fourth communication node may use the same clock source as the first communication node. In the embodiment, the first communication node transmits the first handover request message to the fourth communication node based on an Xn interface. After the fourth communication node receives the first handover request message transmitted by the first communication node, the fourth communication node transmits the reference clock to the second communication node based on the clock source switching information in the first handover request message, so as to implement the precise synchronization between the reference clock of the fourth communication node and the reference clock of the second communication node as quickly as possible.

In an embodiment, the clock synchronization method applied by the first communication node further includes receiving clock source switching information transmitted by the fourth communication node. In the embodiment, if a different clock source exists for each first communication node in the third communication node, the fourth communication node may transmit the clock source switching information to the first communication node to enable the first communication node to transmit the clock source switching information to the second communication node, so as to ensure quick implementation of the precise synchronization between the reference clock of the fourth communication node and the reference clock of the second communication node.

In an embodiment, FIG. 3 is another flowchart of a clock synchronization method according to an embodiment of the present application. This embodiment may be performed by a second communication node. The second communication node may be a terminal side (which, for example, may be a UE). As shown in FIG. 3, the clock synchronization method in this embodiment includes S310 and S320.

In S310, clock source switching information transmitted by a first communication node is received.

In S320, a clock is determined according to the clock source switching information.

In the embodiment, in the case where a clock source where a master clock of the first communication node is located fails, the first communication node actively acquires clock information from a GNSS receiver to generate the corresponding clock source switching information or receives the clock source switching information transmitted by a third communication node and transmits the clock source switching information to the second communication node so that the second communication node can acquire valid clock information according to the clock source switching information to determine a reference clock of the second communication node, so as to ensure precise clock synchronization.

It is to be noted that for the explanation of the clock source switching information, reference is made to the description in the preceding embodiments, and the details are not repeated here.

In an embodiment, the clock is determined according to the clock source switching information in at least one of the following manners: The clock is determined at a clock source switching instant according to a reference clock of a target clock source at the clock source switching instant; a reference clock of an original clock source is updated according to a clock difference between the original clock source and a target clock source; clock information of a target clock source is determined according to a clock difference between an original clock source and the target clock source and the clock is determined at a clock source switching instant; or clock information of a target clock source is determined according to a clock difference between an original clock source and the target clock source at a clock source switching instant and the clock is determined at the clock source switching instant.

In the embodiment, after the first communication node transmits the clock source switching information to the second communication node, the second communication node acquires the valid clock information according to the clock source switching information so that the second communication node determines the reference clock of the second communication node. In an embodiment, in the case where clock information of the original clock source is consistent with or the same as the clock information of the target clock source, the second communication node directly updates the reference clock by using the target clock source. In an embodiment, in the case where the clock difference between the original clock source and the target clock source is a fixed value, the second communication node directly updates the reference clock at the execution instant of the clock source switching according to the reference clock of the target clock source at the clock source switching instant; or the second communication node calculates the master clock of the original clock source according to the clock difference between the original clock source and the target clock source and use the calculated master clock of the original clock source as the reference clock for updating; or the second communication node calculates the clock information of the target clock source according to the clock difference between the original clock source and the target clock source and switches to the target clock source at the clock source switching instant to determine a valid clock of the second communication node. In an embodiment, in the case where the clock difference between the original clock source and the target clock source is a variable value, the second communication node directly updates the reference clock at the execution instant of the clock source switching according to the reference clock of the target clock source at the clock source switching instant; or the second communication node calculates the clock information of the target clock source according to the clock difference between the original clock source and the target clock source at the clock source switching instant and switches to the target clock source at the clock source switching instant to determine the valid clock of the second communication node.

In an embodiment, in the case where the first communication node includes a CU and a DU, receiving the clock source switching information transmitted by the first communication node includes receiving the clock source switching information transmitted by the CU in the first communication node. In the embodiment, in the case where the first communication node is divided into the CU and the DU, the CU transmits the clock source switching information to the second communication node.

In an embodiment, FIG. 4 is another flowchart of a clock synchronization method according to an embodiment of the present application. This embodiment may be performed by a third communication node. The third communication node may be a core network (which, for example, may be an AMF). As shown in FIG. 4, the clock synchronization method in this embodiment includes S410 and S420.

In S410, clock source switching information transmitted by a first communication node is received.

In S420, a clock source is determined according to the clock source switching information.

In the embodiment, the first communication node acquires clock information from a GNSS receiver to generate the corresponding clock source switching information and transmits the clock source switching information to the third communication node to enable the third communication node to determine the clock source according to the clock source switching information and switch to the corresponding clock source, so as to ensure precise clock synchronization between the first communication node and a second communication node.

It is to be noted that for the explanation and description of the clock source switching information, reference may be made to the description in the preceding embodiments, and the details are not repeated here.

In an embodiment, the clock source is determined according to the clock source switching information in at least one of the following manners: Switching is performed at a clock source switching instant according to a reference clock of a target clock source at the clock source switching instant; a reference clock of an original clock source is updated according to a clock difference between the original clock source and a target clock source; clock information of a target clock source is determined according to a clock difference between an original clock source and the target clock source and switching is performed at a clock source switching instant; or clock information of a target clock source is determined according to a clock difference between an original clock source and the target clock source at a clock source switching instant and switching is performed at the clock source switching instant.

In the embodiment, after the first communication node transmits the clock source switching information to the third communication node, the third communication node determines the clock source according to the clock source switching information to switch to the corresponding target clock source. In an embodiment, in the case where clock information of the original clock source is consistent with or the same as the clock information of the target clock source, the third communication node directly updates the reference clock by using the target clock source. In an embodiment, in the case where the clock difference between the original clock source and the target clock source is a fixed value, the third communication node directly switches to the target clock source at the execution instant of the clock source switching according to the reference clock of the target clock source at the clock source switching instant; or the third communication node calculates a master clock of the original clock source according to the clock difference between the original clock source and the target clock source and use the calculated master clock of the original clock source as the reference clock for updating; or the third communication node calculates the clock information of the target clock source according to the clock difference between the original clock source and the target clock source and switches to the target clock source at the clock source switching instant. In an embodiment, in the case where the clock difference between the original clock source and the target clock source is a variable value, the third communication node directly switches to the target clock source at the execution instant of the clock source switching according to the reference clock of the target clock source at the clock source switching instant; or the third communication node calculates the clock information of the target clock source according to the clock difference between the original clock source and the target clock source at the clock source switching instant and switches to the target clock source at the clock source switching instant.

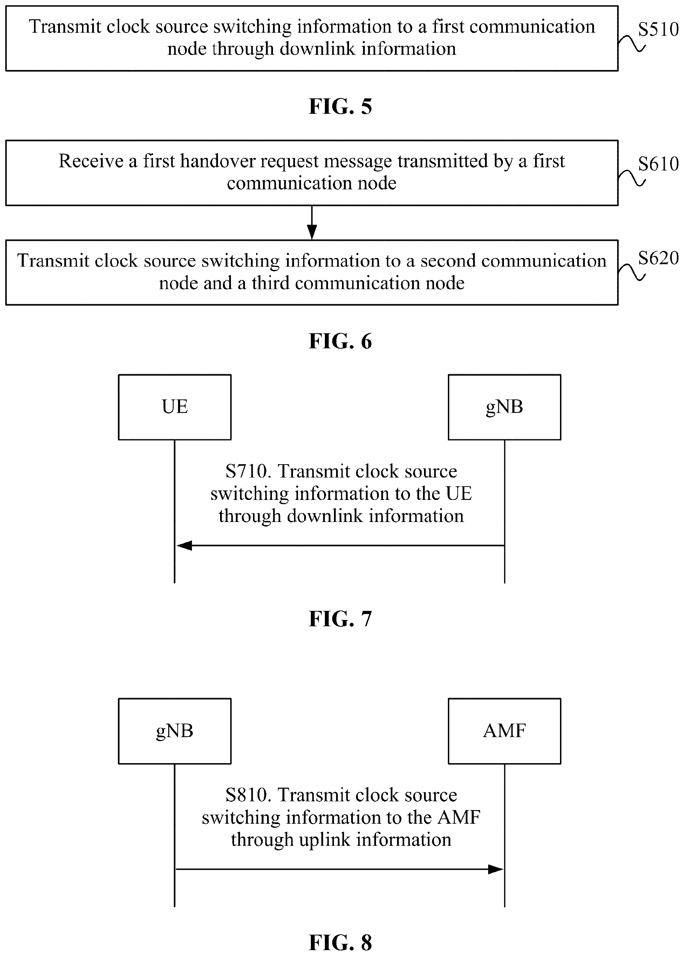

In an embodiment, FIG. 5 is another flowchart of a clock synchronization method according to an embodiment of the present application. This embodiment may be performed by a third communication node. The third communication node may be a core network (which, for example, may be an AMF). As shown in FIG. 5, the clock synchronization method in this embodiment includes S510.

In S510, clock source switching information is transmitted to a first communication node through downlink information.

In the embodiment, in the case where a clock source of the third communication node is switched, to ensure that a clock difference between a second communication node and the third communication node satisfies a traffic requirement, the third communication node may transmit the clock source switching information to the first communication node through the downlink information to enable the first communication node to transmit the clock source switching information to the second communication node to implement clock synchronization.

It is to be noted that for the explanation and description of the clock source switching information, reference may be made to the description in the preceding embodiments, and the details are not repeated here.

In an embodiment, the clock synchronization method applied by the third communication node further includes notifying the first communication node to determine a clock source according to the clock source switching information.

The first communication node is notified to determine the clock source according to the clock source switching information in at least one of the folloiwng manners: The first communication node is notified to perform switching at a clock source switching instant according to a reference clock of a target clock source at the clock source switching instant; the first communication node is notified to update a reference clock of an original clock source according to a clock difference between the original clock source and a target clock source; the first communication node is notified to determine clock information of a target clock source according to a clock difference between an original clock source and the target clock source and perform switching at a clock source switching instant; or the first communication node is notified to determine clock information of a target clock source according to a clock difference between an original clock source and the target clock source at a clock source switching instant and perform switching at the clock source switching instant.

In the embodiment, after the third communication node transmits the clock source switching information to the first communication node, the third communication node notifies the first communication node to determine the clock source according to the clock source switching information to switch to the corresponding target clock source. In an embodiment, in the case where clock information of the original clock source is consistent with or the same as the clock information of the target clock source, the third communication node may notify the first communication node to directly update the reference clock by using the target clock source. In an embodiment, in the case where the clock difference between the original clock source and the target clock source is a fixed value, the third communication node may notify the first communication node to directly switch to the target clock source at the execution instant of the clock source switching according to the reference clock of the target clock source at the clock source switching instant; or the third communication node may notify the first communication node to calculate a master clock of the original clock source according to the clock difference between the original clock source and the target clock source and use the calculated master clock of the original clock source as the reference clock for updating; or the third communication node may notify the first communication node to calculate the clock information of the target clock source according to the clock difference between the original clock source and the target clock source and switch to the target clock source at the clock source switching instant. In an embodiment, in the case where the clock difference between the original clock source and the target clock source is a variable value, the third communication node may notify the first communication node to directly switch to the target clock source at the execution instant of the clock source switching according to the reference clock of the target clock source at the clock source switching instant; or the third communication node may notify the first communication node to calculate the clock information of the target clock source according to the clock difference between the original clock source and the target clock source at the clock source switching instant and switch to the target clock source at the clock source switching instant.

In an embodiment, FIG. 6 is another flowchart of a clock synchronization method according to an embodiment of the present application. This embodiment may be performed by a fourth communication node. The fourth communication node may be a target base station. As shown in FIG. 6, the clock synchronization method in this embodiment includes S610 and S620.

In S610, a first handover request message transmitted by a first communication node is received.

The first handover request message carries at least one of clock source switching information or a state report of an original clock source.

In S620, the clock source switching information is transmitted to a second communication node and a third communication node.

In the embodiment, in a mobile handover procedure of the second communication node, to implement precise synchronization between a reference clock of the fourth communication node and a reference clock of the second communication node more quickly, the fourth communication node may use the same clock source as the first communication node. In the embodiment, after the first handover request message transmitted by the first communication node is received, the clock source switching information is transmitted to the second communication node and the third communication node to enable the second communication node and the third communication node to determine a reference clock according to the clock source switching information.

In an embodiment, the clock synchronization method applied by the fourth communication node further includes receiving a second handover request message transmitted by the third communication node, where the second handover request message carries at least one of the clock source switching information or the state report of the original clock source; and transmitting the clock source switching information to the second communication node.

In the embodiment, in inter-base station handover based on an NG interface, to quickly implement clock synchronization in the presence of multiple clock sources, the third communication node transmits the second handover request message to the fourth communication node to indicate a clock source of the second communication node.

In an example, FIG. 7 is a schematic diagram of interaction for clock synchronization according to an embodiment of the present application. In this embodiment, an interaction process for clock synchronization is described by using an example in which a first communication node is a base station (denoted as a next-generation NodeB (gNB)), a second communication node is a UE, an original clock source is a clock source A, and a target clock source is a clock source B. As shown in FIG. 7, the interaction process for clock synchronization in this embodiment includes S710.

In S710, clock source switching information is transmitted to the UE through downlink information.

In the case where the UE supports multiple clock sources, clock sources of reference clocks used by the UE and the gNB need to be consistent with each other. Therefore, when clock source switching is performed, the gNB needs to transmit indication information related to the clock source switching information to the UE. In the case where the UE transmits a request for acquiring valid clock information to the gNB or the gNB needs to update a reference clock, the clock source A fails and is required to be switched to the clock source B, and the gNB transmits the clock source switching information to the UE through unicast or broadcast and indicates the clock source switching information to the UE. The clock source switching information includes at least one of switching indication information for switching from the clock source A to the clock source B, a reference clock of the clock source B at a clock source switching instant, a clock difference between the clock source A and the clock source B, a clock difference between the clock source A and the clock source B at a clock source switching instant, a clock source switching instant, or a state report of the original clock source.

In the case where clock information of the clock source A is consistent with clock information of the clock source B or the clock difference between the clock source A and the clock source B is a fixed value, a clock switching solution is described below.

Within a validity time of the clock source A on a UE side, the base station or the UE switches a reference clock source by at least one of the following methods; In the case of the same clock information, the base station or the UE updates the reference clock by using the clock source B; in the case where the clock difference is the fixed value, the base station or the UE determines a clock at the clock source switching instant according to the reference clock of the clock source B; in the case where the clock difference is the fixed value, the base station or the UE calculates a clock of the clock source A according to the clock difference between the clock source A and the clock source B and uses the calculated clock of the clock source A as the reference clock for updating; or in the case where the clock difference is the fixed value, the base station or the UE calculates the clock information of the clock source B according to the clock difference between the clock source A and the clock source B and performs switching at the clock source switching instant.

In the case where the clock information of the clock source A is inconsistent with the clock information of the clock source B and the clock difference between the clock source A and the clock source B is not a fixed value, the clock switching solution is described below.

Within the validity time of the clock source A on the UE side, the base station or the UE determines the clock by at least one of the following methods: The base station or the UE determines the clock at the clock source switching instant according to the reference clock of the clock source B at the clock source switching instant; or the base station or the UE calculates the clock information of the clock source B according to the clock difference between the clock source A and the clock source B at the clock source switching instant and performs switching at the clock source switching instant.

A manner for transmitting the clock source switching information includes the following cases: In the case where the clock source switching information is transmitted through unicast, the gNB transmits the indication information including the clock source switching information to the UE, where the indication manner includes at least one of: including the clock source switching information in downlink information transmission (for example, DLInformationTransfer) or including the clock source switching information in reference clock information (for example, a ReferenceTimeInfo information element (IE)); in the case where clock information is transmitted through broadcast, the base station indicates the clock source switching information to the UE through an SIB or an MAC CE or DCI, where the indication manner includes at least one of: including the clock source switching information in the SIB, predefining, in an LCID reserved in a DL-SCH, an MAC CE format including the clock source switching information, pre-defining a DCI format carrying the clock source switching information, or including the clock source switching information in the reference clock information.

In an example, FIG. 8 is another schematic diagram of interaction for clock synchronization according to an embodiment of the present application. In this embodiment, an interaction process for clock synchronization is described by using an example in which a first communication node is a base station (denoted as a gNB), a second communication node is a UE, an original clock source is a clock source A, and a target clock source is a clock source B. As shown in FIG. 8, the interaction process for clock synchronization in this embodiment includes S810.

In S810, clock source switching information is transmitted to an AMF through uplink information.

In the embodiment, in the case where a clock source of the gNB is switched, in order that a clock error between the UE and the AMF satisfies a traffic requirement, the gNB needs to notify the AMF through the uplink information. In the embodiment, the gNB notifies the AMF of the clock source switching information by the method below.

In the case where clock information of the clock source A is consistent with clock information of the clock source B or a clock difference between the clock source A and the clock source B is a fixed value, a clock switching solution is described below.

Within a validity time of the clock source A on a UE side, the base station notifies the AMF to switch the clock source by at least one of the following schemes In the case of the same clock information, the base station notifies the AMF to update a reference clock by using the clock source B; in the case where the clock difference is the fixed value, the base station notifies the AMF to determine and switch to a clock source at a clock source switching instant according to a reference clock of the clock source B; in the case where the clock difference is the fixed value, the base station notifies the AMF to calculate a clock of the clock source A according to the clock difference between the clock source A and the clock source B and use the calculated clock of the clock source A as the reference clock for updating; or in the case where the clock difference is the fixed value, the base station notifies the AMF to calculate the clock information of the clock source B according to the clock difference between the clock source A and the clock source B and determine and switch to the clock source at the clock source switching instant.

In the case where the clock information of the clock source A is inconsistent with the clock information of the clock source B and the clock difference between the clock source A and the clock source B is not a fixed value, the clock switching solution is described below.

Within the validity time of the clock source A on the UE side, the base station notifies the AMF to switch the clock source by at least one of the following schemes: the base station notifies the AMF to determine the clock source at the clock source switching instant according to the reference clock of the clock source B at the clock source switching instant; or the base station notifies the AMF to calculate the clock information of the clock source B according to the clock difference between the clock source A and the clock source B at the clock source switching instant and perform switching at the clock source switching instant.

The uplink information includes one of: switching indication information for switching from the clock source A to the clock source B, the reference clock of the clock source B at the switching instant, the clock difference between the clock source A and the clock source B, the clock source switching instant, or a state report of the current clock source. The uplink information includes at least one of: predefined dedicated signaling including the preceding information, NG SETUP REQUEST, a random access network (RAN) CONFIGURATION UPDATE message, an AMF CONFIGURATION UPDATE ACKNOWLEDGE message, an NG RESET ACKNOWLEDGE message, an ERROR INDICATION message, an OVERLOAD START message, an UPLINK RAN CONFIGURATION TRANSFER message, a WRITE-REPLACE WARNING RESPONSE message, or a HANDOVER REQUEST ACKNOWLEDGE message.

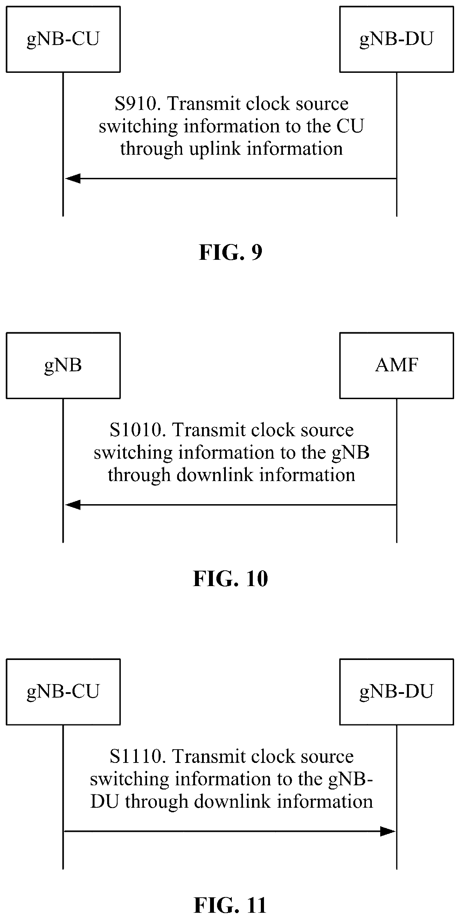

Further, in the case where a gNB is divided into a centralized unit of a base station (gNB-CU) and a distributed unit of the base station (gNB-DU), precise clock information carried in a radio resource control (RRC) message is from the gNB-DU. In the case of clock source is switched, the gNB-DU needs to actively provide the gNB-CU with clock source switching information. FIG. 9 is another schematic diagram of interaction for clock synchronization according to an embodiment of the present application. In this embodiment, an interaction process for clock synchronization is described by using an example in which an original clock source is a clock source A and a target clock source is a clock source B. As shown in FIG. 9, the interaction process for clock synchronization between the CU and the DU in this embodiment includes S910.

In S910, the clock source switching information is transmitted to the CU through uplink information.

After the gNB-DU senses that the original clock source fails, the gNB-DU needs to actively transmit the clock source switching information to the gNB-CU through the uplink information. The clock source switching information includes one of: switching indication information for switching from the clock source A to the clock source B, a reference clock of the clock source B at a switching instant, a clock error value between the clock source A and the clock source B, or a clock source switching instant. The uplink information includes at least one of: REFERENCE TIME INFORMATION REPORT, gNB-DU CONFIGURATION UPDATE, gNB-DU STATUS INDICATION, UE CONTEXT SETUP REQUEST, UE CONTEXT RELEASE REQUEST, UE CONTEXT MODIFICATION REQUIRED, UE INACTIVITY NOTIFICATION, NOTIFY, INITIAL UL RRC MESSAGE TRANSFER, UL RRC MESSAGE TRANSFER, or RRC CONTAINER DELIVERY REPORT.

In an example, FIG. 10 is another schematic diagram of interaction for clock synchronization according to an embodiment of the present application. In this embodiment, an interaction process for clock synchronization is described by using an example in which a first communication node is a base station (denoted as a gNB), a third communication node is an AMF, an original clock source is a clock source A, and a target clock source is a clock source B. As shown in FIG. 10, the interaction process for clock synchronization in this embodiment includes S1010.

In S1010, clock source switching information is transmitted to the gNB through downlink information.

In the case where a clock source of the AMF is switched, in order that a clock error between a UE and the AMF satisfies a traffic requirement, the AMF needs to notify the gNB through the downlink information. A notification method of the AMF is described below.

In the case where clock information of the clock source A is consistent with clock information of the clock source B or a clock difference between the clock source A and the clock source B is a fixed value, a clock switching solution is described below.

Within a validity time of the clock source A on a UE side, the AMF notifies the base station to determine a clock by at least one of the following schemes: In the case of the same clock information, the AMF notifies the base station to update a reference clock by using the clock source B; in the case where the clock difference is the fixed value, the AMF notifies the base station to determine and switch to a clock source at a clock source switching instant according to a reference clock of the clock source B; in the case where the clock difference is the fixed value, the AMF notifies the base station to calculate a clock of the clock source A according to the clock difference between the clock source A and the clock source B and use the calculated clock of the clock source A as the reference clock and update the reference clock for updating ; in the case where the clock difference is the fixed value, the AMF notifies the base station to calculate the clock information of the clock source B according to the clock difference between the clock source A and the clock source B and determine and switch to the clock source at the clock source switching instant.

In the case where the clock information of the clock source A is inconsistent with the clock information of the clock source B and the clock difference between the clock source A and the clock source B is not a fixed value, the AMF notifies the base station to determine the clock by at least one of the schemes below.

Within the validity time of the clock source A on the UE side, the AMF notifies the base station to determine the clock by at least one of the following schemes: The AMF notifies the base station to determine the clock source at the clock source switching instant according to the reference clock of the clock source B at the clock source switching instant; or the AMF notifies the base station to calculate the clock information of the clock source B according to the clock difference between the clock source A and the clock source B at the clock source switching instant and perform switching at the clock source switching instant.

The downlink information includes one of: switching indication information for switching from the clock source A to the clock source B, the reference clock of the clock source B at the switching instant, a clock difference between the clock source A and the clock source B, or the clock source switching instant. The downlink information includes at least one of: predefined dedicated signaling including the preceding information, HANDOVER REQUEST ACKNOWLEDGE, PATH SWITCH REQUEST, UE CONTEXT RELEASE COMPLETE, UE CONTEXT RELEASE, PAGING, or LOCATION REPORT.

Further, in the case where a gNB is divided into a centralized unit of a base station (gNB-CU) and a distributed unit of the base station (gNB-DU), precise clock information carried in an RRC message is from the gNB-DU. In the case of clock source is switched, the gNB-CU provides the gNB-DU with clock source switching information.

FIG. 11 is another schematic diagram of interaction for clock synchronization according to an embodiment of the present application. In this embodiment, an interaction process for clock synchronization is described by using an example in which an original clock source is a clock source A and a target clock source is a clock source B. As shown in FIG. 11, the interaction process for clock synchronization between the CU and the DU in this embodiment includes S 1110.

In S1110, the clock source switching information is transmitted to the gNB-DU through downlink information.

After the gNB-CU senses that the original clock source fails, the gNB-CU needs to actively transmit the clock source switching information to the gNB-DU through the downlink information. The clock source switching information includes one of: switching indication information for switching from the clock source A to the clock source B or a clock source switching instant. The downlink information includes at least one of: RESET ACKNOWLEDGE, ERROR INDICATION, F1 SETUP RESPONSE, GNB-DU CONFIGURATION UPDATE ACKNOWLEDGE, GNB-CU CONFIGURATION UPDATE, GNB-DU RESOURCE COORDINATION REQUEST, F1 REMOVAL REQUEST, F1 REMOVAL RESPONSE, NETWORK ACCESS RATE REDUCTION, or RESOURCE STATUS REQUEST.

In an example, in a mobile handover procedure, to implement precise synchronization between a reference clock of a target gNB and a reference clock of a UE more quickly, the target gNB uses the same clock source as an original gNB. Two examples are described below.

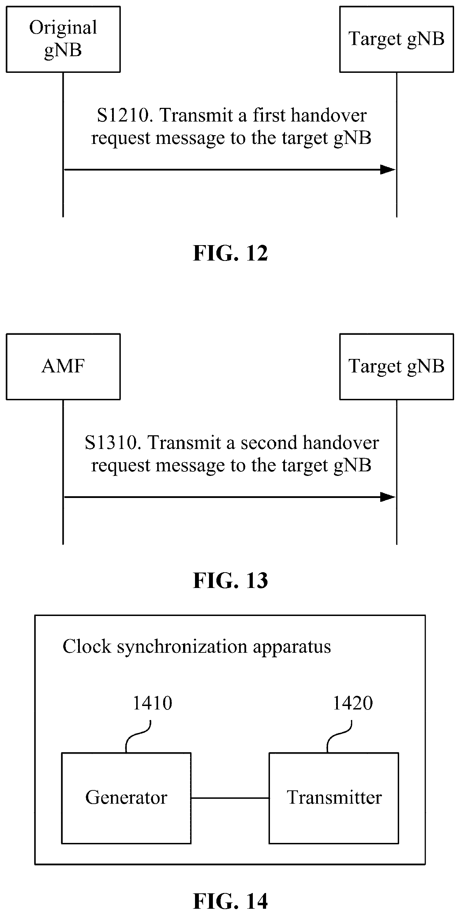

In example one, FIG. 12 is another schematic diagram of interaction for clock synchronization according to an embodiment of the present application. In this embodiment, a process of clock synchronization is described by using an example in which a first communication node is the original gNB and a fourth communication node is the target gNB. As shown in FIG. 12, an interaction process for clock synchronization in this embodiment includes S1210.

In S1210, a first handover request message is transmitted to the target gNB.

In the embodiment, in inter-base station handover based on an Xn interface, clock sources are different between a gNB and another gNB, that is, a different clock source exists for each gNB in a core network. Therefore, when the original gNB transmits the handover request message (HANDOVER REQUEST) to the target gNB, the information includes at least one of: information about a clock source of a UE or a state report of a current clock source of the original gNB. After receiving indication information about the clock source of the UE from the original gNB, the target gNB transmits reference clock to the UE based on the preceding information, and the target gNB notifies the core network of switching indication information for switching from a clock source A to a clock source B or a clock difference between a clock source A and a clock source B. Additionally, after receiving the state report of the current clock source of the original gNB, the target gNB transmits a reference clock to the UE based on the preceding information.

In example two, FIG. 13 is another schematic diagram of interaction for clock synchronization according to an embodiment of the present application. In this embodiment, the process of clock synchronization is described by using an example in which a third communication node is the core network, the first communication node is the original gNB, and the fourth communication node is the target gNB. As shown in FIG. 13, the interaction process for clock synchronization in this embodiment includes S1310.

In S1310, a second handover request message is transmitted to the target gNB.

In inter-base station handover based on an NG interface, to quickly implement the clock synchronization in the presence of multiple clock sources, the core network indicates the clock source of the UE corresponding to the target gNB. In the case where an AMF transmits the second handover request message (HANDOVER REQUEST) to the target gNB, the information includes at least one of the information about the clock source of the UE or the state report of the current clock source corresponding to the original gNB. After receiving the indication information about the clock source of the UE or the state report of the current clock source of the original gNB from the AMF, the target gNB transmits the reference clock to the UE based on the preceding information.

In an embodiment, FIG. 14 is a block diagram of a clock synchronization apparatus according to an embodiment of the present application. This embodiment is applied to a first communication node. As shown in FIG. 14, the clock synchronization apparatus in this embodiment includes a generator 1410 and a transmitter 1420.

The generator 1410 is configured to, in response to detecting a failure of an original clock source where a master clock is located, generate corresponding clock source switching information according to a target clock source.

The transmitter 1420 is configured to transmit the clock source switching information to a second communication node or a third communication node.

In an embodiment, the clock source switching information includes at least one of: clock source switching indication information, a reference clock of the target clock source at a clock source switching instant, a clock difference between the original clock source and the target clock source, a clock difference between the original clock source and the target clock source at a clock source switching instant, a clock source switching instant, or a state report of the original clock source.

In an embodiment, the clock synchronization apparatus applied to the first communication node further includes a first notification module.

The first notification module is configured to notify the second communication node to determine a clock according to the clock source switching information.

The second communication node is notified to determine the clock according to the clock source switching information in at least one of the following manners: Notifying the second communication node to determine the clock at a clock source switching instant according to a reference clock of the target clock source at the clock source switching instant; notifying the second communication node to update a reference clock of the original clock source according to a clock difference between the original clock source and the target clock source; notifying the second communication node to determine clock information of the target clock source according to a clock difference between the original clock source and the target clock source and determine the clock at a clock source switching instant; or notifying the second communication node to determine clock information of the target clock source according to a clock difference between the original clock source and the target clock source at a clock source switching instant and determine the clock at the clock source switching instant.

In an embodiment, indication information corresponding to the clock source switching includes at least one of: downlink information, reference clock information, an SIB, an MAC CE predefined in an LCID reserved in a DL-SCH, or DCI.

In an embodiment, the clock synchronization apparatus applied to the first communication node further includes a second notification module.

The second notification module is configured to notify the third communication node to determine a clock source according to the clock source switching information.

In an embodiment, the second notification module is configured to perform at least one of the following operations: Notifying the third communication node to perform switching at a clock source switching instant according to a reference clock of the target clock source at the clock source switching instant; notifying the third communication node to update a reference clock of the original clock source according to a clock difference between the original clock source and the target clock source; notifying the third communication node to determine clock information of the target clock source according to a clock difference between the original clock source and the target clock source and perform switching at a clock source switching instant; or notifying the third communication node to determine clock information of the target clock source according to a clock difference between the original clock source and the target clock source at a clock source switching instant and perform switching at the clock source switching instant.

In an embodiment, in the case where the first communication node includes a CU and a DU, the transmitter 1420 includes a first transmitting unit and a second transmitting unit.

The first transmitting unit is configured to cause the DU to actively transmit the clock source switching information to the CU through uplink information.

The second transmitting unit is configured to cause the CU to transmit the clock source switching information to the second communication node or the third communication node.

The clock synchronization apparatus of this embodiment is configured to perform the clock synchronization method applied by the first communication node in the embodiment shown in FIG. 1. The implementation principles and technical effects of the clock synchronization apparatus of this embodiment are similar to those of the clock synchronization method applied by the first communication node in the embodiment shown in FIG. 1 and thus are not repeated here.

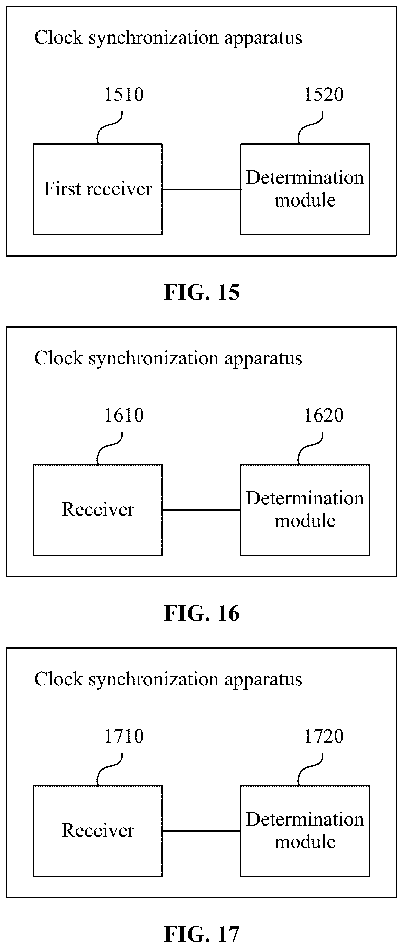

In an embodiment, FIG. 15 is a block diagram of another clock synchronization apparatus according to an embodiment of the present application. This embodiment may be applied by a first communication node. The first communication node may be a base station. As shown in FIG. 15, the clock synchronization apparatus in this embodiment includes a first receiver 1510 and a determination module 1520.

The first receiver 1510 is configured to receive clock source switching information transmitted by a third communication node through downlink information.

The determination module 1520 is configured to determine a clock according to the clock source switching information.

In an embodiment, the determination module 1520 is configured to perform at least one of: Determining the clock at a clock source switching instant according to a reference clock of a target clock source at the clock source switching instant; updating a reference clock of an original clock source according to a clock difference between the original clock source and a target clock source; determining clock information of a target clock source according to a clock difference between an original clock source and the target clock source and determining the clock at a clock source switching instant; or determining clock information of a target clock source according to a clock difference between an original clock source and the target clock source at a clock source switching instant and determining the clock at the clock source switching instant.

In an embodiment, in the case where the first communication node includes a CU and a DU, the first receiver 1510 includes a receiving unit and a transmitting unit.

The receiving unit is configured to cause the CU to receive the clock source switching information transmitted by the third communication node through the downlink information.

The transmitting unit is configured to cause the CU to actively transmit the clock source switching information to the DU through downlink information.

In an embodiment, in the case where the first communication node serves as an original base station, the clock synchronization apparatus applied to the first communication node further includes a transmitter.

The transmitter is configured to transmit a first handover request message to a fourth communication node, where the first handover request message carries at least one of the clock source switching information or a state report of the original clock source.

In an embodiment, the clock synchronization apparatus applied to the first communication node further includes a second receiver.

The second receiver is configured to receive clock source switching information transmitted by the fourth communication node.

The clock synchronization apparatus of this embodiment is configured to perform the clock synchronization method applied by the first communication node in the embodiment shown in FIG. 2. The implementation principles and technical effects of the clock synchronization apparatus of this embodiment are similar to those of the clock synchronization method applied by the first communication node in the embodiment shown in FIG. 2 and thus are not repeated here.

In an embodiment, FIG. 16 is a block diagram of another clock synchronization apparatus according to an embodiment of the present application. This embodiment may be applied by a second communication node. The second communication node may be a terminal side (which, for example, may be a UE). As shown in FIG. 16, the clock synchronization apparatus in this embodiment includes a receiver 1610 and a determination module 1620.

The receiver 1610 is configured to receive clock source switching information transmitted by a first communication node.

The determination module 1620 is configured to determine a clock according to the clock source switching information.

In an embodiment, the determination module 1620 is configured to perform at least one of: Determining the clock at a clock source switching instant according to a reference clock of a target clock source at the clock source switching instant; updating a reference clock of an original clock source according to a clock difference between the original clock source and a target clock source; determining clock information of a target clock source according to a clock difference between an original clock source and the target clock source and determining the clock at a clock source switching instant; or determining clock information of a target clock source according to a clock difference between an original clock source and the target clock source at a clock source switching instant and determining the clock at the clock source switching instant.

In an embodiment, in the case where the first communication node includes a CU and a DU, the receiver 1610 is configured to receive the clock source switching information transmitted by the CU in the first communication node.

The clock synchronization apparatus of this embodiment is configured to perform the clock synchronization method applied by the second communication node in the embodiment shown in FIG. 3. The implementation principles and technical effects of the clock synchronization apparatus of this embodiment are similar to those of the clock synchronization method applied by the second communication node in the embodiment shown in FIG. 3 and thus are not repeated here.

In an embodiment, FIG. 17 is a block diagram of another clock synchronization apparatus according to an embodiment of the present application. This embodiment may be applied by a third communication node. The third communication node may be a core network (which, for example, may be an AMF). As shown in FIG. 17, the clock synchronization apparatus in this embodiment includes a receiver 1710 and a determination module 1720.

The receiver 1710 is configured to receive clock source switching information transmitted by a first communication node.

The determination module 1720 is configured to determine a clock source according to the clock source switching information.

In an embodiment, the determination module 1720 is configured to perform at least one of: Performing switching at a clock source switching instant according to a reference clock of a target clock source at the clock source switching instant; updating a reference clock of an original clock source according to a clock difference between the original clock source and a target clock source; determining clock information of a target clock source according to a clock difference between an original clock source and the target clock source and performing switching at a clock source switching instant; or determining clock information of a target clock source according to a clock difference between an original clock source and the target clock source at a clock source switching instant and performing switching at the clock source switching instant.

The clock synchronization apparatus of this embodiment is configured to perform the clock synchronization method applied by the third communication node in the embodiment shown in FIG. 4. The implementation principles and technical effects of the clock synchronization apparatus of this embodiment are similar to those of the clock synchronization method applied by the third communication node in the embodiment shown in FIG. 4 and thus are not repeated here.

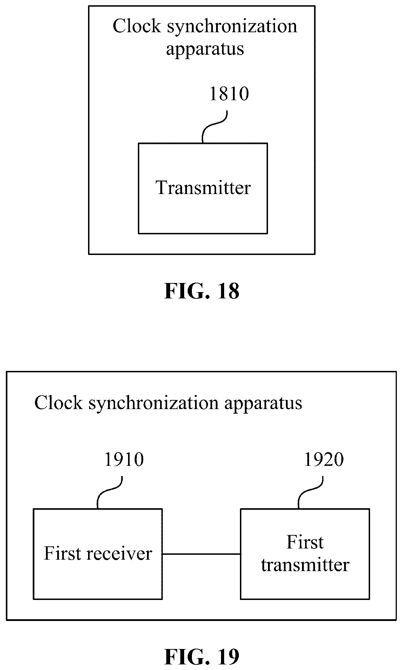

In an embodiment, FIG. 18 is a block diagram of another clock synchronization apparatus according to an embodiment of the present application. This embodiment may be applied by a third communication node. The third communication node may be a core network (which, for example, may be an AMF). As shown in FIG. 18, the clock synchronization apparatus in this embodiment includes a transmitter 1810.

The transmitter 1810 is configured to transmit clock source switching information to a first communication node through downlink information.

In an embodiment, the clock synchronization apparatus applied to the third communication node further includes a notification module.

The notification module is configured to notify the first communication node to determine a clock source according to the clock source switching information.

The notification module is configured to perform at least one of: Notifying the first communication node to perform switching at a clock source switching instant according to a reference clock of a target clock source at the clock source switching instant; notifying the first communication node to update a reference clock of an original clock source according to a clock difference between the original clock source and a target clock source; notifying the first communication node to determine clock information of a target clock source according to a clock difference between an original clock source and the target clock source and perform switching at a clock source switching instant; or notifying the first communication node to determine clock information of a target clock source according to a clock difference between an original clock source and the target clock source at a clock source switching instant and perform switching at the clock source switching instant.

The clock synchronization apparatus of this embodiment is configured to perform the clock synchronization method applied by the third communication node in the embodiment shown in FIG. 5. The implementation principles and technical effects of the clock synchronization apparatus of this embodiment are similar to those of the clock synchronization method applied by the third communication node in the embodiment shown in FIG. 5 and thus are not repeated here.

In an embodiment, FIG. 19 is a block diagram of another clock synchronization apparatus according to an embodiment of the present application. This embodiment may be applied by a fourth communication node. The fourth communication node may be a target base station. As shown in FIG. 19, the clock synchronization apparatus in this embodiment includes a first receiver 1910 and a first transmitter 1920.

The first receiver 1910 is configured to receive a first handover request message transmitted by a first communication node.

The first handover request message carries at least one of clock source switching information or a state report of an original clock source.

The first transmitter 1920 is configured to transmit the clock source switching information to a second communication node and a third communication node.

In an embodiment, the clock synchronization apparatus applied to the fourth communication node further includes a second receiver and a second transmitter.

The second receiver is configured to receive a second handover request message transmitted by the third communication node, where the second handover request message carries at least one of the clock source switching information or the state report of the original clock source.

The second transmitter is configured to transmit the clock source switching information to the second communication node.

The clock synchronization apparatus of this embodiment is configured to perform the clock synchronization method applied by the fourth communication node in the embodiment shown in FIG. 6. The implementation principles and technical effects of the clock synchronization apparatus of this embodiment are similar to those of the clock synchronization method applied by the fourth communication node in the embodiment shown in FIG. 6 and thus are not repeated here.

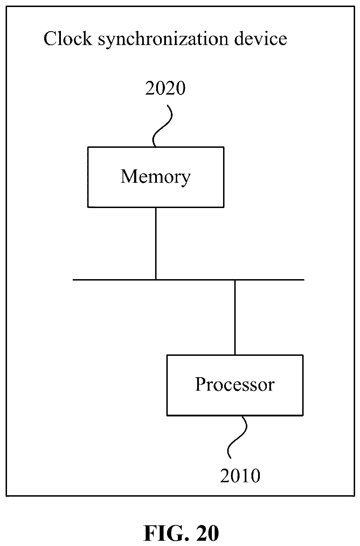

FIG. 20 is a structural diagram of a clock synchronization device according to an embodiment of the present application. As shown in FIG. 20, the device provided in the present application includes a processor 2010, a memory 2020, and a communication module 2030. One or more processors 2010 may be provided in the device. One processor 2010 is shown as an example in FIG. 20. One or more memories 2020 may be provided in the device. One memory 2020 is shown as an example in FIG. 20. The processor 2010, the memory 2020, and the communication module 2030 of the device may be connected by a bus or otherwise. The connection by a bus is shown as an example in FIG. 20. In the embodiment, the device may be a terminal side (for example, a UE).

As a computer-readable storage medium, the memory 2020 may be configured to store software programs, computer-executable programs, and modules, such as program instructions/modules corresponding to the device of any embodiment of the present application (for example, the generator 1410 and the transmitter 1420 in the clock synchronization apparatus). The memory 2020 may include a program storage region and a data storage region. The program storage region may store an operating system and an application program required by at least one function. The data storage region may store data created according to the use of the device. Additionally, the memory 2020 may include a high-speed random-access memory and may also include a nonvolatile memory, such as at least one magnetic disk memory, a flash memory, or another nonvolatile solid-state memory. In some examples, the memory 2020 may further include memories that are remotely disposed relative to the processor 2010. These remote memories may be connected to the device via a network. Examples of the preceding network include, but are not limited to, the Internet, an intranet, a local area network, a mobile communication network, and a combination thereof.

In the case where the clock synchronization device is a first communication node, the preceding device may be configured to perform the clock synchronization method applied by the first communication node according to any one of the preceding embodiments and has the corresponding functions and effects.

In the case where the clock synchronization device is a second communication node, the preceding device may be configured to perform the clock synchronization method applied by the second communication node according to any one of the preceding embodiments and has the corresponding functions and effects.

In the case where the clock synchronization device is a third communication node, the preceding device may be configured to perform the clock synchronization method applied by the third communication node according to any one of the preceding embodiments and has the corresponding functions and effects.

In the case where the clock synchronization device is a fourth communication node, the preceding device may be configured to perform the clock synchronization method applied by the fourth communication node according to any one of the preceding embodiments and has the corresponding functions and effects.

An embodiment of the present application provides a storage medium. The storage medium stores computer-executable instructions which, when executed by a computer processor, cause the processor to perform a clock synchronization method applied by a first communication node. The method includes: in response to detecting a failure of an original clock source where a master clock is located, generating corresponding clock source switching information according to a target clock source; and transmitting the clock source switching information to a second communication node or a third communication node.

An embodiment of the present application provides a storage medium. The storage medium stores computer-executable instructions which, when executed by a computer processor, cause the processor to perform a clock synchronization method applied by a first communication node. The method includes receiving clock source switching information transmitted by a third communication node through downlink information; and determining a clock according to the clock source switching information.

An embodiment of the present application provides a storage medium. The storage medium stores computer-executable instructions which, when executed by a computer processor, cause the processor to perform a clock synchronization method applied by a second communication node. The method includes receiving clock source switching information transmitted by a first communication node; and determining a clock according to the clock source switching information.

An embodiment of the present application provides a storage medium. The storage medium stores computer-executable instructions which, when executed by a computer processor, cause the processor to perform a communication method applied by a third communication node. The method includes receiving clock source switching information transmitted by a first communication node; and determining a clock source according to the clock source switching information.

An embodiment of the present application provides a storage medium. The storage medium stores computer-executable instructions which, when executed by a computer processor, cause the processor to perform a communication method applied by a third communication node. The method includes transmitting clock source switching information to a first communication node through downlink information.

An embodiment of the present application provides a storage medium. The storage medium stores computer-executable instructions which, when executed by a computer processor, cause the processor to perform a communication method applied by a fourth communication node. The method includes receiving a first handover request message transmitted by a first communication node, where the first handover request message carries at least one of clock source switching information or a state report of an original clock source; and transmitting the clock source switching information to a second communication node and a third communication node.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FGPA), and a processor based on a multi-core processor architecture.

The above are merely embodiments of the present application and are not to limit the present application, and for those skilled in the art, the present application may have various modifications and variations. Any modifications, equivalent substitutions, improvements, and the like made within the principle of the present application fall within the scope of the present application.

## Claims

1. A clock synchronization method, the method being applied by a first communication node and comprising:
in response to detecting a failure of an original clock source where a master clock is located, generating corresponding clock source switching information according to a target clock source; and
transmitting the clock source switching information to a second communication node or a third communication node.

2. The method of claim 1, wherein the clock source switching information comprises at least one of: clock source switching indication information, a reference clock of the target clock source at a clock source switching instant, a clock difference between the original clock source and the target clock source, a clock difference between the original clock source and the target clock source at a clock source switching instant, a clock source switching instant, or a state report of the original clock source.

3. The method of claim 1, further comprising: notifying the second communication node to determine a clock according to the clock source switching information;
wherein notifying the second communication node to determine the clock according to the clock source switching information comprises at least one of:
notifying the second communication node to determine the clock at a clock source switching instant according to a reference clock of the target clock source at the clock source switching instant;
notifying the second communication node to update a reference clock of the original clock source according to a clock difference between the original clock source and the target clock source;
notifying the second communication node to determine clock information of the target clock source according to a clock difference between the original clock source and the target clock source and determine the clock at a clock source switching instant; or
notifying the second communication node to determine clock information of the target clock source according to a clock difference between the original clock source and the target clock source at a clock source switching instant and determine the clock at the clock source switching instant.

4. The method of claim 1, wherein indication information corresponding to the clock source switching information comprises at least one of: downlink information; reference clock information, a system information block, SIB, a media access control control element, MAC CE, predefined in a local identifier, LCID, reserved in a downlink shared channel, DL-SCH, or downlink control information, DCI.

5. The method of claim 1, further comprising:
notifying the third communication node to determine a clock source according to the clock source switching information.

6. The method of claim 5, wherein notifying the third communication node to determine the clock source according to the clock source switching information comprises at least one of:
notifying the third communication node to perform switching at a clock source switching instant according to a reference clock of the target clock source at the clock source switching instant;
notifying the third communication node to update a reference clock of the original clock source according to a clock difference between the original clock source and the target clock source;
notifying the third communication node to determine clock information of the target clock source according to a clock difference between the original clock source and the target clock source and perform switching at a clock source switching instant; or
notifying the third communication node to determine clock information of the target clock source according to a clock difference between the original clock source and the target clock source at a clock source switching instant and perform switching at the clock source switching instant.

7. The method of claim 1, wherein in a case where the first communication node comprises a centralized unit, CU, and a distributed unit, DU, transmitting the clock source switching information to the second communication node or the third communication node comprises:
actively transmitting, by the DU, the clock source switching information to the CU through uplink information; and
transmitting, by the CU, the clock source switching information to the second communication node or the third communication node.

8. A clock synchronization method, the method being applied by a first communication node and comprising:
receiving clock source switching information transmitted by a third communication node through downlink information; and
determining a clock according to the clock source switching information.

9. The method of claim 8, wherein determining the clock according to the clock source switching information comprises at least one of:
determining the clock at a clock source switching instant according to a reference clock of a target clock source at the clock source switching instant;
updating a reference clock of an original clock source according to a clock difference between the original clock source and a target clock source;
determining clock information of a target clock source according to a clock difference between an original clock source and the target clock source and determining the clock at a clock source switching instant; or
determining clock information of a target clock source according to a clock difference between an original clock source and the target clock source at a clock source switching instant and determining the clock at the clock source switching instant.

10. The method of claim 8, wherein in a case where the first communication node comprises a centralized unit, CU, and a distributed unit, DU, receiving the clock source switching information transmitted by the third communication node through the downlink information comprises:
receiving, by the CU, the clock source switching information transmitted by the third communication node through the downlink information; and
actively transmitting, by the CU, the clock source switching information to the DU through downlink information.

11. The method of claim 1 or 8, wherein in a case where the first communication node serves as an original base station, the method further comprises:
transmitting a first handover request message to a fourth communication node, wherein the first handover request message carries at least one of the clock source switching information or a state report of the original clock source.

12. The method of claim 1 or 8, further comprising:
receiving clock source switching information transmitted by a fourth communication node.

13. A clock synchronization method, the method being applied by a second communication node and comprising:
receiving clock source switching information transmitted by a first communication node; and
determining a clock according to the clock source switching information.

14. The method of claim 13, wherein determining the clock according to the clock source switching information comprises at least one of:
determining the clock at a clock source switching instant according to a reference clock of a target clock source at the clock source switching instant;
updating a reference clock of an original clock source according to a clock difference between the original clock source and a target clock source;
determining clock information of a target clock source according to a clock difference between an original clock source and the target clock source and determining the clock at a clock source switching instant; or
determining clock information of a target clock source according to a clock difference between an original clock source and the target clock source at a clock source switching instant and determining the clock at the clock source switching instant.

15. The method of claim 13, wherein in a case where the first communication node comprises a centralized unit, CU, and a distributed unit, DU, receiving the clock source switching information transmitted by the first communication node comprises:
receiving the clock source switching information transmitted by the CU in the first communication node.

16. A clock synchronization method, the method being applied by a third communication node and comprising:
receiving clock source switching information transmitted by a first communication node; and
determining a clock source according to the clock source switching information.

17. The method of claim 16, wherein determining the clock source according to the clock source switching information comprises at least one of:
performing switching at a clock source switching instant according to a reference clock of a target clock source at the clock source switching instant;
updating a reference clock of an original clock source according to a clock difference between the original clock source and a target clock source;
determining clock information of a target clock source according to a clock difference between an original clock source and the target clock source and performing switching at a clock source switching instant; or
determining clock information of a target clock source according to a clock difference between an original clock source and the target clock source at a clock source switching instant and performing switching at the clock source switching instant.

18. A clock synchronization method, the method being applied by a third communication node and comprising:
transmitting clock source switching information to a first communication node through downlink information.

19. The method of claim 18, further comprising: notifying the first communication node to determine a clock source according to the clock source switching information;
wherein notifying the first communication node to determine the clock source according to the clock source switching information comprises at least one of:
notifying the first communication node to perform switching at a clock source switching instant according to a reference clock of a target clock source at the clock source switching instant;
notifying the first communication node to update a reference clock of an original clock source according to a clock difference between the original clock source and a target clock source;
notifying the first communication node to determine clock information of a target clock source according to a clock difference between an original clock source and the target clock source and perform switching at a clock source switching instant; or
notifying the first communication node to determine clock information of a target clock source according to a clock difference between an original clock source and the target clock source at a clock source switching instant and perform switching at the clock source switching instant.

20. A clock synchronization method, the method being applied by a fourth communication node and comprising:
receiving a first handover request message transmitted by a first communication node, wherein the first handover request message carries at least one of clock source switching information or a state report of an original clock source; and
transmitting the clock source switching information to a second communication node and a third communication node.

21. The method of claim 20, further comprising:
receiving a second handover request message transmitted by the third communication node, wherein the second handover request message carries at least one of the clock source switching information or the state report of the original clock source; and
transmitting the clock source switching information to the second communication node.

22. A clock synchronization device, comprising a memory and at least one processor;
wherein the memory is configured to store at least one program; and
the at least one processor is configured to perform the method of any one of claims 1 to 7, the method of any one of claims 8 to 12, the method of any one of claims 13 to 15, the method of claim 16 or 17, the method of claim 18 or 19, or the method of claim 20 or 21 when executing the at least one program.

23. A storage medium storing a computer program which, when executed by a processor, causes the processor to perform the method of any one of claims 1 to 7, the method of any one of claims 8 to 12, the method of any one of claims 13 to 15, the method of claim 16 or 17, the method of claim 18 or 19, or the method of claim 20 or 21.
